# EUROPÄISCHE PATENTSCHRIFT

(11) **EP 1 428 752 B1**
(45) Veröffentlichungstag und Bekanntmachung des Hinweises auf die Patenterteilung: **04.10.2006**
(21) Anmeldenummer: 03027900.4
(22) Anmeldetag: 05.12.2003
(51) Int. Cl.: B64C 27/00, B64C 27/72

(54) **Hubschrauber mit reduziertem Blatt-Wirbel-Wechselwirkungs-Lärm**
Helicopter with reduced blade vortex interaction noise
Hélicoptère avec réduction du bruit d'interaction pales-tourbillons

(30) Priorität: 11.12.2002 DE 10257844
(43) Veröffentlichungstag der Anmeldung: 16.06.2004
(73) Patentinhaber: ZF FRIEDRICHSHAFEN Aktiengesellschaft, 88038 Friedrichshafen (DE)
(72) Erfinder: Arnold, Uwe, 34121 Kassel (DE)

(56) Entgegenhaltungen:
- EP-A- 1 262 403
- DE-C- 10 022 819
- MORBITZER D ET AL: "Vibration and Noise Reduction through Individual Blade Control Experimental and Theoretical Results" PROCEEDINGS OF THE 24TH EUROPEAN ROTORCRAFT FORUM, 15. - 17. September 1998, Seiten TE10-1-TE10-12, XP009025538 Marseille, France

## Beschreibung

Die Erfindung betrifft einen Hubschrauber nach dem Oberbegriff des Hauptanspruchs.

Ein wesentliches Entwicklungsziel für Hubschrauber ist die Verminderung des abgestrahlten Lärms. In bestimmten Flugzuständen wird ein besonders unangenehm empfundener Rotorlärm abgestrahlt, der durch die sogenannte BlattWirbel-Wechselwirkung (Blade Vortex Interaction, BVI) verursacht wird. Dabei kreuzen die Rotorblätter die Flugbahn der von den vorauslaufenden Rotorblättern erzeugten Blattspitzenwirbel. Treffen solche Wirbel in kleinem Abstand und annähernd parallel auf ein nachfolgendes Blatt, entstehen grosse Drucksprünge, welche ihrerseits unerwünschten Lärm erzeugen. Dies trifft beispielsweise bei bestimmten Sinkgeschwindigkeiten des Hubschraubers zu und ist daher gerade bei Landeanflügen ein wesentlicher Lärmfaktor.

In der US 5,437,419 sind verschiedene Lösungsansätze zur Reduzierung von BVI-Lärm erwähnt. Darunter sind Ansätze, welche die Vergrößerung des Abstandes zwischen Rotorblatt und Randwirbel an den Orten der kritischen Begegnungen beinhalten. Beispielsweise werden die Rotorblätter in ungleichem Blattabstand an der Rotornabe, Paare von gegenüberliegenden Blättern in unterschiedlichen Blattanschlussebenen angeordnet oder aufeinanderfolgende Rotorblätter mit unterschiedlichen Längen ausgebildet. Ferner ist ein Lösungsansatz bekannt, bei dem zwei Gruppen von Rotorblättern desselben Rotors gebildet werden, wobei die Rotorblätter der verschiedenen Gruppen unterschiedliche Blattspitzenebenen (tip-path-planes, TPP) aufweisen, indem die Rotorblätter einer Gruppe beim sogenannten Tracking gezielt dejustiert werden.

Die von der US 5,437,419 vorgeschlagene Lösung beinhaltet ein Element zur Erzeugung eines horizontalen Widerstands, um den Neigungswinkel der Blattspitzenebene zu verändern.

Die DE 100 22 819 C1 offenbart ein Verfahren und eine Vorrichtung zur Vermeidung der Kollision eines rotierenden Rotorblatts eines Drehflüglers mit Blattwirbeln. Dabei ist vorgesehen, dass ein Rotorblatt über eine kurzzeitige Änderung des Blattauftriebs einem Blattwirbel ausweichen kann.

Das Dokument EP 1 262 403 A2 zeigt eine individuelle Rotorblatt-Steuerungsvorrichtung, bei der jedem Rotorblatt ein individueller Aktuator zugeordnet ist, wobei jeder Aktuator ein Sicherungsmittel aufweist, um ihn bedarfsweise in einer Endlage festzuhalten. Eine Hälfte der Rotorblatt-Aktuatoren ist in einer ersten Endlage, die andere Hälfte in der entgegengesetzten Endlage verriegelbar. Werden die Rotorblatt-Aktuatoren in ihren entgegengesetzten Endlagen verriegelt, beschreiben die Blattspitzen der Rotorblatt-Aktuatoren während ihres Umlaufs um die Rotorachse Bahnen in verschiedenen Ebenen.

All diese Lösungsansätze sind sehr aufwendig oder mit anderen Nachteilen behaftet. Bei dem Lösungsansatz, bei welchem zwei Gruppen von Rotorblättern sich statisch in ihrem Niveau der Blattspitzenebene unterscheiden, werden zwar für bestimmte Flugzustände Verbesserungen hinsichtlich BVI-Lärm erzielt, dafür müssen jedoch Einschränkungen bei anderen Flugzuständen hingenommen werden.

Der Erfindung liegt daher die Aufgabe zugrunde, einen Hubschrauber mit reduzierter BVI-Lärmabstrahlung anzugeben, der die Nachteile des Standes der Technik nicht aufweist.

Erfindungsgemäß wird diese Aufgabe durch einen, auch die Merkmale des kennzeichnenden Teils des Hauptanspruchs aufweisenden Hubschrauber gelöst.

Vorteilhafte Ausgestaltungen der Erfindung sind durch die Unteransprüche gegeben.

Der Hubschrauber-Hauptrotor des erfindungsgemäßen Hubschraubers weist Steuermittel auf, welche dafür vorgesehen sind, an benachbarten Rotorblättern während des Flugs wahlweise unterschiedliche Einstellwinkel-Verläufe einzusteuern. Hierdurch wird ermöglicht, dass die Blattspitzen von benachbarten Rotorblättern bei einer Rotation verschiedene Bahnen beschreiben, welche den Blatt-Wirbel-Wechselwirkungs-Lärm (BVI) verhindern oder zumindest abschwächen. Die Steuermittel erlauben in Flugzuständen, welche bezüglich BVI-Lärm unkritisch sind, bei allen Rotorblättern dieselben Einstellwinkel-Verläufe einzusteuern. Dieser Steuerzustand, der einem Hubschrauber mit exakt einjustierten Blattspitzenebenen entspricht, ist für viele Flugzustände optimal. Bei Flugzuständen, bei denen ansonsten BVI-Lärm abgestrahlt würde, erlauben die Steuermittel, an benachbarten Rotorblättern unterschiedliche Einstellwinkel-Verläufe einzusteuern, wodurch der BVI-Lärm verhindert wird.

In einer vorteilhaften Ausgestaltung der Erfindung beträgt die Anzahl der Rotorblätter mindestens vier und ist geradzahlig. Die Rotorblätter sind mehreren Gruppen von gleichmäßig am Umfang der Rotornabe angeordneten Rotorblättern zugeordnet, wobei die Rotorblätter einer Gruppe in einem quasi-statischen Zustand denselben Einstellwinkel-Verlauf aufweisen. Bei einem vierblättrigen Rotor werden also zwei Gruppen von sich jeweils gegenüberliegenden Rotorblättern gebildet, deren Rotorblätter in einem quasi-statischen Zustand - also in einem Zustand, bei dem ein Rotorblatt bei jedem Rotorumlauf denselben Einstellwinkel-Verlauf aufweist - denselben Einstellwinkel-Verlauf aufweisen. Bei einem sechsblättrigen Rotor können entweder zwei Gruppen zu jeweils drei Blättern oder drei Gruppen zu jeweils zwei Blättern gebildet werden. Diese Ausgestaltung der Erfindung zeichnet sich durch ihre Rotorsymmetrie aus.

In einer Ausführungsform der Erfindung ist zur monozyklischen und kollektiven Verstellung der Einstellwinkel der Rotorblätter eine Taumelscheibe vorgesehen und mindestens den Rotorblättern der zweiten und jeder weiteren Gruppe mindestens ein Aktuator zugeordnet, dessen Steuerbewegungen einen Differenzwinkel-Verlauf erzeugen, welcher dem von der Taumelscheibe erzeugten Einstellwinkel-Verlauf überlagert ist. Systeme, welche die Voraussetzungen für eine derartige Einsteuerung aufweisen, sind grundsätzlich bekannt und beispielsweise in der DE 198 41 853 A1 oder der EP 1 153 829 A2 gezeigt.

Grundsätzlich ist es möglich, für den Hubschrauber-Piloten eine Bedieneinrichtung bereitzustellen, mit deren Hilfe er bei Bedarf benachbarten Rotorblättern unterschiedliche Einstellwinkel-Verläufe einsteuert.

In einer vorteilhaften Ausgestaltung der Erfindung ist jedoch eine elektronische Steuerungseinrichtung vorgesehen, welche in bestimmten Flugzuständen an benachbarten Rotorblättern automatisch unterschiedliche Einstellwinkel-Verläufe einsteuert. Hierdurch wird der Hubschrauber-Pilot entlastet.

Die Flugzustände, bei denen automatisch unterschiedliche Einstellwinkel-Verläufe eingesteuert werden, können durch eine laufende Messung von BVI-Lärm mit einem BVI-Lärm-Sensor während des Fluges identifiziert werden oder auch dadurch, dass ein Flugzustand, bei welchem BVI-Lärm auftritt, anhand eines Vergleichs von gemessenen und in der Steuerungseinrichtung abgespeicherten Flugzustands-Parametern erkannt wird.

Dafür geeignete Flugzustands-Parameter sind beispielsweise:
- Sinkrate,
- Geschwindigkeit gegenüber der umgebenden Luft,
- Antriebsleistung,
- Hubschrauber-Masse oder
- Knickwinkel.

Im einfachsten Fall wird für die verschiedenen Gruppen von Rotorblättern ein im wesentlichen konstanter Differenzwinkel eingesteuert, dessen Betrag für verschiedene Flugzustände veränderbar ist. Hierdurch wird erreicht, dass die Rotorblätter der verschiedenen Gruppen verschiedene Niveaus der Blattspitzenebenen (TPP) aufweisen, und sich die Blattspitzenbahnen nicht kreuzen. Allerdings tragen bei dieser Ausgestaltung der Erfindung die verschiedenen Gruppen von Rotorblättern unterschiedlich zum Gesamtauftrieb bei.

Bei einer alternativen Einsteuerungsform weist der Einstellwinkel-Verlauf der Rotorblätter der verschiedenen Gruppen eine Phasenverschiebung auf, indem ein monozyklischer Differenzwinkel eingesteuert wird. Dabei weisen die Schubvektoren der einzelnen Gruppen von Rotorblättern unterschiedliche Richtungen auf, und die verschiedenen Bahnen der Rotorblattspitzen schneiden sich. Die Orte der Überschneidung sind durch die Phasenverschiebung beeinflussbar und so gewählt, dass kein BVI-Lärm erzeugt wird.

Die Erfindung wird anhand der beiliegenden Figuren näher erläutert.
Darin zeigen:
- Fig. 1: schematisch die Verhältnissse bei einem Hubschrauber-Hauptrotor, unter denen BVI-Lärm entsteht
- Fig. 2: einen Hubschrauber-Hauptrotor mit zwei verschiedenen Ebenen der Rotorblattspitzenbahnen;
- Fig. 3: einen Rotoreinstellwinkel-Verlauf und
- Fig. 4: einen Rotoreinstellwinkel-Verlauf.

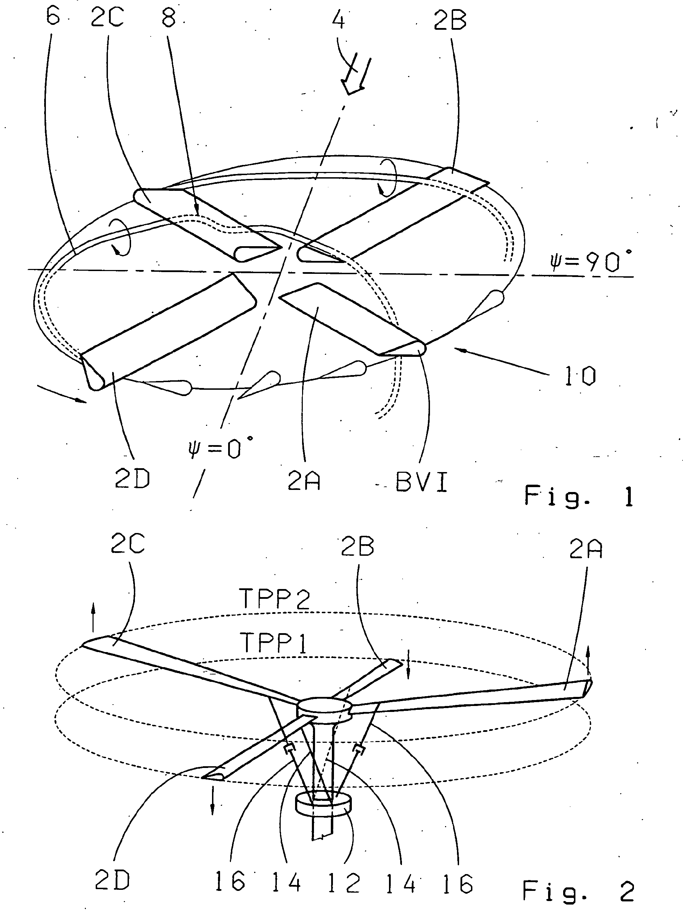

In Fig. 1 sind mit 2A bis 2D die vier Rotorblätter eines vierblättrigen Hubschrauber-Hauptrotors gezeigt. Der mit 4 bezeichnete Pfeil symbolisiert die anströmende Luft. Vom Rotorblatt 2D löst sich der Randwirbel 6 ab. An der mit 8 bezeichneten Stelle wird der Randwirbel 6 vom Rotorblatt 2C nach unten abgelenkt. An der mit 10 bezeichneten Stelle trifft der Randwirbel 6 auf das Rotorblatt 2A, so dass dort grosse Drucksprünge entstehen, welche den BlattWirbel-Wechselwirkungs-Lärm (BVI-Lärm) verursachen. Die Grundeinstellwinkel der vier Rotorblätter 2A bis 2D sind bei dem in Fig. 1 dargestellten Rotor gleich justiert, so dass die Blattspitzen aller vier Rotorblätter 2A bis 2D dieselbe Bahn in derselben Ebene beschreiben.

Beim erfindungsgemäßen Hubschrauber-Hauptrotor gemäss Fig. 2 beschreiben die Blattspitzen benachbarter Rotorblätter bei einer Rotation verschiedene Bahnen. Die sich gegenüberliegenden Rotorblätter 2A und 2C beschreiben die mit TPP2 und die beiden gegenüberliegenden Rotorblätter 2B und 2D die mit TPP1 bezeichnete Bahn. Die Rotorblätter 2A, 2C sowie 2B, 2D bilden jeweils eine Gruppe, welche in einem quasi-statischen Zustand, ohne veränderte Steuereingaben, denselben Einstellwinkel-Verlauf bei einer Rotation aufweisen. In Fig. 2 ist mit 12 der drehende Teil einer Taumelscheibe bezeichnet, die von nicht dargestellten Steuerungselementen für eine kollektive Rotorblatt-Verstellung vertikal bewegt wird oder für eine zyklische Rotorblatt-Verstellung geneigt wird. Die beiden Rotorblätter 2B, 2D sind über herkömmliche Steuerstangen 14 an der Taumelscheibe 12 angelenkt. Zwischen der Taumelscheibe 12 und den Blatthörnern der Rotorblätter 2A, 2D sind längenverstellbare elektrische oder elektro-hydraulische Aktuatoren 16 angeordnet. Diese Aktuatoren 16 erlauben, den Rotorblättern 2A, 2C während des Flugs wahlweise unterschiedliche Einstellwinkel-Verläufe aufzuprägen. Im dargestellten Fall sind die beiden Aktuatoren 16 gegenüber den beiden Steuerstangen 14 um einen konstanten Differenzbetrag länger, so dass die beiden Rotorblätter 2A, 2C einen etwas grösseren Einstellwinkel aufweisen als die beiden Rotorblätter 2B, 2D und demzufolge die Bahnebene der Blattspitzen TPP2 höher ist als die Bahnebene der Blattspitzen TPP1. Durch die räumliche Trennung der beiden Ebenen TPP1, TPP2 wird das Zusammentreffen eines Rotorblatts mit einem Randwirbel eines anderen Rotorblatts verhindert, so dass kein BVI-Lärm entsteht.

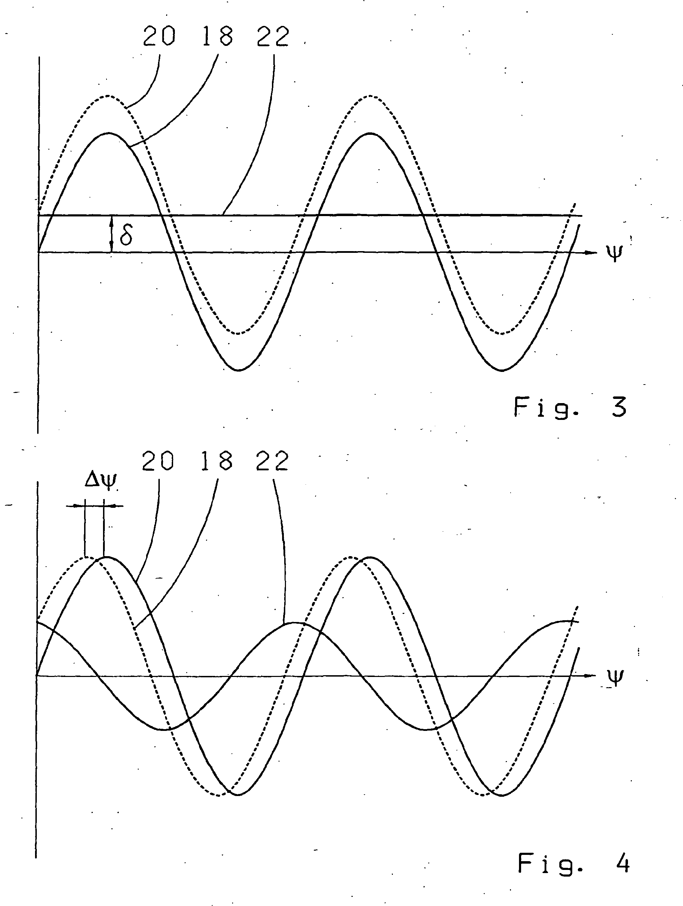

In Fig. 3 sind die Einstellwinkel-Verläufe 18, 20 über dem Umlaufwinkel ψ jedes einzelnen Blatts dargestellt. Es handelt sich also nicht um Einstellwinkel, die an den Rotorblättern zeitgleich anliegen, sondern vielmehr um die Einstellwinkel, die am selben Ort des Rotorumlaufs anliegen. Während des gesamten Rotorumlaufs ist der Differenzwinkel δ konstant, was einem in Fig. 2 dargestellten Flugzustand entspricht.

In Fig. 4 weist der mit 18 bezeichnete Einstellwinkel-Verlauf gegenüber dem mit 20 bezeichneten Einstellwinkel-Verlauf eine Phasenverschiebung △ψ auf; die dadurch erzeugt wird, dass ein monozyklischer Differenzwinkel-Verlauf 22 eingesteuert wird.

### Bezugszeichen

- 2A bis 2D: Rotorblätter
- 4: Luftstrom
- 6: Randwirbel
- 8: Stelle
- 10: Stelle
- 12: drehender Teil einer Taumelscheibe
- 14: Steuerstange
- 16: Aktuator
- 18: Einstellwinkel-Verlauf
- 20: Einstellwinkel-Verlauf
- 22: Differenzwinkel

- TPP1, TPP2: Blattspitzenbahnebene

## Patentansprüche

1. Hubschrauber mit einem Hubschrauber-Hauptrotor, mit einer auf einem drehantreibbaren Rotormast angeordneten Rotornabe, an deren Umfang mehrere Rotorblätter (2) angeordnet sind, mit Mitteln (12) zur zyklischen und kollektiven Verstellung der Einstellwinkel der Rotorblätter (2), wobei der Hubschrauber-Hauptrotor Steuermittel (16) aufweist, welche dafür vorgesehen sind, an benachbarten Rotorblättern während des Fluges wahlweise unterschiedliche Einstellwinkel-Verläufe einzusteuern, so dass die Blattspitzen der benachbarten Rotorblätter bei einer Rotation verschiedene Bahnen beschreiben, wobei die Anzahl der Rotorblätter mindestens vier beträgt und geradzahlig ist, der Rotor von mehreren Gruppen (2A, 2C; 2B, 2D) von gleichmäßig am Umfang der Rotornabe angeordneten Rotorblättern (2) gebildet wird, **dadurch gekennzeichnet, dass** die Rotorblätter (2A, 2C) jeder Gruppe in einem quasi-statischen Zustand denselben Einstellwinkel-Verlauf aufweisen.

2. Hubschrauber nach Anspruch 1, **dadurch gekennzeichnet, dass** zur monozyklischen und kollektiven Verstellung der Einstellwinkel der Rotorblätter (2) eine Taumelscheibe (12) vorgesehen ist und mindestens den Rotorblättern (2A, 2C) der zweiten und jeder weiteren Gruppe mindestens ein Aktuator (16) zugeordnet ist, dessen Steuerbewegungen einen Differenzwinkel-Verlauf (22) erzeugen, welcher dem von der Taumelscheibe (12) erzeugten Einstellwinkel-Verlauf (18) überlagert ist.

3. Hubschrauber nach einem der Ansprüche 1 oder 2, **dadurch gekennzeichnet, dass** eine elektronische Steuerungseinrichtung für die Steuermittel vorgesehen ist, welche in bestimmten Flugzuständen an benachbarten Rotorblättern automatisch unterschiedliche Einstellwinkel-Verläufe einsteuert.

4. Hubschrauber nach Anspruch 3, **dadurch gekennzeichnet, dass** die elektronische Steuerungseinrichtung einen Signaleingang eines BVI-Lärm-Sensors aufweist und an benachbarten Rotorblättern automatisch unterschiedliche Einstellwinkel-Verläufe abhängig von dem Signal des BVI-Sensors einsteuert.

5. Hubschrauber nach Anspruch 3 oder 4, **dadurch gekennzeichnet, dass** die elektronische Steuerungseinrichtung Signaleingänge für Flugzustands-Parameter aufweist sowie einen Speicherbereich, in dem Wertebereiche und Wertekombinationen der Flugzustands-Parameter abgelegt sind, bei welchen BVI-Lärm auftritt, und dass sie automatisch unterschiedliche Einstellwinkel-Verläufe an benachbarten Rotorblättern einsteuert, wenn die Signale der Flugzustands-Parameter mit den abgelegten Wertebereichen oder Wertekombinationen übereinstimmen.

6. Hubschrauber nach Anspruch 5, **dadurch gekennzeichnet, dass** die Flugzustands-Parameter einen oder mehrere der Parameter, Sinkrate, Geschwindigkeit gegenüber der umgebenden Luft, Antriebsleistung, Hubschraubermasse oder Nickwinkel umfassen.

7. Hubschrauber nach einem der Ansprüche 1 bis 6, **dadurch gekennzeichnet, dass** während eines Rotorumlaufs ein im wesentlichen konstanter Differenzwinkel (22) eingesteuert wird, dessen Betrag für verschiedene Flugzustände veränderbar ist.

8. Hubschrauber nach einem der Ansprüche 1 bis 6, **dadurch gekennzeichnet, dass** der Einstellwinkel-Verlauf der Rotorblätter der verschiedenen Gruppen eine Phasenverschiebung aufweist, indem ein monozyklischer Differenzwinkelverlauf (22) eingesteuert wird.

## Claims

1. Helicopter with a helicopter main rotor, with a rotor hub disposed on a rotor mast which can be driven in rotation, around the circumference of which several rotor blades (2) are disposed, with means (12) for cyclically and collectively adjusting the pitch angle of the rotor blades (2), and the helicopter main rotor has control means (16) which are provided as a means of selectively adjusting adjacent rotor blades during the flight to obtain different pitch angle curves so that the blade tips of adjacent rotor blades describe different paths during a rotation, and the number of rotor blades is at least four and is an even number, and the rotor is formed by several groups (2A, 2C; 2B, 2D) of rotor blades (2) disposed uniformly around the circumference of the rotor hub, **characterised in that** the rotor blades (2A, 2C) of each group have the same pitch angle curve in a quasi-static state.

2. Helicopter as claimed in claim 1, **characterised in that** a swash plate (12) is provided as a means of mono-cyclically and collectively adjusting the pitch angle of the rotor blades (2) and at least the rotor blades (2A, 2C) of the second and every other group are provided with at least one actuator (16), the control movements of which create a differential angle curve (22) which is superimposed on the pitch angle curve (18) produced by the swash plate (12).

3. Helicopter as claimed in one of claims 1 or 2, **characterised in that** an electronic control device is provided for the control means, which automatically adjusts adjacent rotor blades to different pitch angle curves in specific flight states.

4. Helicopter as claimed in claim 3, **characterised in that** the electronic control device has a signal input of a BVI noise sensor and automatically adjusts adjacent rotor blades to different pitch angle curves depending on the signal from the BVI sensor.

5. Helicopter as claimed in claim 3 or 4, **characterised in that** the electronic control unit has signal inputs for flight state parameters and a memory area in which value ranges and value combinations of the flight state parameters at which BVI noise occurs are stored, and adjacent rotor blades are automatically adjusted to different pitch angle curves if the signals of the flight state parameters match the stored value ranges or value combinations.

6. Helicopter as claimed in claim 5, **characterised in that** the flight state parameters comprise one or more of the parameters based on rate of descent, speed relative to the ambient air, driving power, helicopter mass or pitch angle.

7. Helicopter as claimed in one of claims 1 to 6, **characterised in that** an adjustment is made to an essentially constant differential angle (22) during a rotor revolution, the amount of which is variable for different flight states.

8. Helicopter as claimed in one of claims 1 to 6, **characterised in that** the pitch angle curve of the rotor blades of different groups has a phase shift and an adjustment is made to a monocyclic differential angle curve (22).

## Revendications

1. Hélicoptère comportant un rotor principal, un moyeu de rotor monté sur un mât de rotor pouvant être entraîné en rotation, et à la périphérie duquel sont montées plusieurs pales de rotor (2), des moyens (12) pour la variation cyclique et collective de l'angle de pas des pales (2) du rotor, le rotor principal de l'hélicoptère comportant des moyens de commande (16) qui sont prévus pour imposer des lois de variation d'angle de pas sélectivement différentes à des pales adjacentes du rotor pendant le vol, de manière que, dans une rotation, les pointes des pales adjacentes du rotor décrivent des trajectoires différentes, le nombre des pales du rotor étant d'au moins quatre et étant un nombre pair, le rotor étant formé de plusieurs groupes (2A, 2C ; 2B, 2D) de pales (2) disposés régulièrement à la périphérie du moyeu du rotor, **caractérisé en ce que** les pales (2A, 2C) de chaque groupe présentent la même loi de variation d'angle de pas dans un état quasi statique.

2. Hélicoptère selon la revendication 1, **caractérisé en ce qu'**un plateau oscillant (12) est prévu pour la variation monocyclique et collective de l'angle de pas des pales (2) du rotor et au moins un actionneur (16) est associé au moins aux pales (2A, 2C) du deuxième groupe et de chaque autre groupe, actionneur dont les mouvements de commande produisent une loi de variation d'angle différentielle (22) qui se superpose à la loi de variation d'angle de pas (18) produite par le plateau oscillant (12).

3. Hélicoptère selon l'une des revendications 1 ou 2, **caractérisé en ce qu'**il est prévu pour les moyens de commande un dispositif de commande électronique qui impose automatiquement différentes lois de variation d'angle de pas à des pales adjacentes du rotor dans certains états de vol.

4. Hélicoptère selon la revendication 3, **caractérisé en ce que** le dispositif de commande électronique comporte une entrée de signal d'un capteur de bruit BVI et impose automatiquement différentes lois de variation d'angle de pas à des pales adjacentes en fonction du signal du capteur BVI.

5. Hélicoptère selon la revendication 3 ou 4, **caractérisé en ce que** le dispositif de commande électronique comporte des entrées de signaux pour des paramètres d'état de vol, ainsi qu'une zone de mémoire dans laquelle sont enregistrés des intervalles de valeurs et des combinaisons de valeurs des paramètres d'état de vol dans lesquels il apparaît un bruit BVI, et **en ce qu'**il impose automatiquement différentes lois de variation d'angle de pas à des pales adjacentes du rotor lorsque les signaux des paramètres d'état de vol concordent avec les intervalles de valeurs ou combinaisons de valeurs enregistrés.

6. Hélicoptère selon la revendication 5, **caractérisé en ce que** les paramètres d'état de vol comprennent un ou plusieurs des paramètres suivants: vitesse de descente, vitesse par rapport à l'air environnant, puissance d'entraînement, masse de l'hélicoptère ou angle de tangage.

7. Hélicoptère selon l'une des revendications 1 à 6, **caractérisé en ce que**, pendant un tour du rotor, est imposé un angle différentiel (22) sensiblement constant dont la valeur peut être modifiée pour différents états de vol.

8. Hélicoptère selon l'une des revendications 1 à 6, **caractérisé en ce que** la loi de variation d'angle de pas des pales des différents groupes présente un déphasage en ce sens qu'une loi de variation d'angle différentielle monocyclique (22) est imposée.
